# EUROPÄISCHE PATENTSCHRIFT

(11) **EP 3 461 686 B1**
(45) Veröffentlichungstag und Bekanntmachung des Hinweises auf die Patenterteilung: **16.12.2020**
(21) Anmeldenummer: 18000892.2
(22) Anmeldetag: 11.07.2017
(51) Int. Cl.: B60P 1/44

(54) **HUBLADEBÜHNE**
CANTILEVER LIFT
PLATE-FORME DE CHARGEMENT PAR LEVAGE

(30) Priorität: 28.07.2016 DE 102016009156
(43) Veröffentlichungstag der Anmeldung: 03.04.2019
(62) Teilanmeldung aus: 17001177.9
(73) Patentinhaber: Palfinger Tail Lifts GmbH, 27777 Ganderkesee (DE)
(72) Erfinder: Popken, Uwe, 26209 Hatten (DE); Bley, Hubert, 49681 Garrel (DE)
(74) Vertreter: Möller, Friedrich

(56) Entgegenhaltungen:
- WO-A2-2006/133964
- DE-A1- 4 430 568
- DE-A1-102006 010 261
- DE-U1- 8 020 141

## Beschreibung

Die Erfindung betrifft eine Hubladebühne gemäß dem Oberbegriff des Anspruchs 1.

Eine solche Hubladebühne geht beispielsweise aus Dokument DE 44 30 568 A1 hervor, welches den nächstliegenden Stand der Technik darstellt und den Oberbegriff des Anspruchs 1 offenbart. Hubladebühnen dienen dazu, bei Fahrzeugen aller Art das Be- und Entladen von Gütern zu erleichtern. Dazu verfügen diese Hubladebühnen über eine heb- und senkbar und im Allgemeinen auch schwenkbar an einem Fahrzeug angelenkte Ladeplattform. Die Ladeplattform ist zu diesem Zweck an der Rückseite des Fahrzeugs mit Hilfe eines Hubwerks angeordnet, vorzugsweise im Bereich der Rückseite eines Aufbaus des Fahrzeuges. Das Hubwerk weist üblicherweise zumindest einen Linearantrieb wie beispielsweise einen Hydraulikzylinder oder eine elektromotorisch antreibbare Gewindespindel, zum Heben bzw. Senken der Ladeplattform auf. Zum Verschwenken der Ladeplattform ist vorzugsweise wenigstens ein weiterer Linearantrieb vorgesehen.

Das Hubwerk ist im Regelfall an einem Tragrohr befestigt, das wiederum mit dem Fahrzeug verbunden ist, insbesondere im Bereich von dessen Fahrzeugrahmen bzw. dessen Längsträgern. Eine parallelogrammförmige Ausbildung des Hubwerks mit vorzugsweise wenigstens zwei, zumindest im Wesentlichen parallel verschwenkbaren Lenkerarmen sorgt dafür, dass die Ladeplattform in parallelen Ebenen höhenverstellbar ist. Zusätzlich bzw. unabhängig davon, kann die Ladeplattform verschwenkt werden.

In der sogenannten Ruheposition liegt die Ladeplattform im Wesentlichen senkrecht ausgerichtet derart an der Rückseite des Aufbaus des Fahrzeuges an, dass eine an der Rückseite des Aufbaus angeordnete Öffnung durch die Ladeplattform verschließbar ist. In der sogenannten Betriebsposition ist die Ladeplattform im Wesentlichen horizontal ausgerichtet. Dabei ist die zumindest zwischen der Betriebsposition mit einem Niveau auf Höhe des Aufbaus bzw. der Ladefläche des Fahrzeugs zum Ein- und Ausladen von Gütern und der auch als Ladeposition bezeichneten Betriebsposition mit einer auf dem Boden aufliegenden Stellung der Ladeplattform zum Be- und Entladen von Gütern bewegbar. In der Ladeposition bzw. Stellung auf dem Boden ist die befahrbare Oberfläche bzw. Nutzfläche der Ladeplattform im Allgemeinen leicht geneigt gegenüber der Horizontalen ausgerichtet, da die Ladeplattform insgesamt einen keilförmigen Querschnitt aufweist. Dabei ist ein vom Fahrzeug abgewandter Querrand der Ladeplattform spitz zulaufend ausgebildet, während eine dem Fahrzeug zugewandte Querkante der Ladeplattform zur Anlenkung des Hubwerks entsprechend breiter bzw. höher ausgebildet ist.

Zum Betätigen der Ladeplattform, insbesondere zum Verstellen der Ladeplattform aus einer Ruheposition in eine Ladeposition, ist es für die Steuerung essentiell, den Neigungswinkel der Ladeplattform bezüglich einer Referenzebene zu kennen. Es ist bekannt, dass den Ladeplattformen Neigungssensoren zugeordnet sind, welche eine relative Lage der Ladeplattform erstellen können. Dazu wird zusätzlich zu den übrigen Einrichtungen zum Steuern bzw. Überwachen der Ladeplattform ein Sensor zur Bestimmung des Neigungswinkels an der Ladeplattform befestigt. Für eine verlässliche Messung des Neigungswinkels kommt es darauf an, den Sensor an einer entsprechenden Position anzubringen. Wenn der Sensor in einer anderen Position an der Ladeplattform befestigt wird, kann es zu fehlerhaften Messungen des Neigungswinkels kommen und infolge dessen zur Beschädigung der Güter oder gar zur Verletzung der Bedienperson.

Der Erfindung liegt daher die Aufgabe zugrunde, eine Hubladebühne zu schaffen, mit welcher der Betrieb auf eine einfache und sichere Art erfolgen kann.

Eine Hubladebühne zur Lösung dieser genannten Aufgabe weist die Merkmale des Anspruchs 1 auf. Demnach ist es vorgesehen, dass die mindestens eine elektronische Komponente einer Steckverbindung mit einem Stecker und einer an der Hubladebühne befestigbaren Steckdose zugeordnet ist. Diese mindestens eine elektronische Komponente kann einer Steuerung zugeordnet sein, welche der Steuerung und/oder Überwachung des wenigstens einen Antriebs zum Heben, Senken und/oder Verschwenken der Ladeplattform dient. Die Hubladebühne gemäß Anspruch 6 ist insbesondere in Kombination zu betrachten mit einem der Ansprüche 1 bis 5. Dadurch, dass die mindestens eine elektronische Komponente der Steckverbindung zugeordnet ist, lässt sich die Komponente auf eine einfache Art und Weise an der Hubladebühne befestigen und ansteuern.

Bevorzugt kann es weiter vorgesehen sein, dass die mindestens eine elektronische Komponente in dem Stecker und in der Steckdose integriert ist. Erfindungsgemäß ist die elektronische Komponente in dem Stecker integriert. Somit wird der Stecker lediglich in die Steckdose geführt, damit der Stecker die nötige mechanische Befestigung an der Hubladebühne erfährt. Sämtliche elektronischen Komponenten zur Steuerung des Betriebs der Hubladebühne befinden sich im Stecker. Somit lässt sich die Hubladebühne durch ein bloßes Zusammenstecken des Steckers mit der Steckdose in Betrieb nehmen. Ein weiteres Ausführungsbeispiel kann es vorsehen, dass sowohl der Stecker als auch die Steckdose elektronische Komponenten aufweisen, die unabhängig voneinander oder zusammengesteckt in Kombination miteinander zusammenwirken. Auch hier lässt sich durch das einfache mechanische Zusammenfügen des Steckers mit der Steckdose die Hubladebühne in Betrieb nehmen.

Insbesondere kann es weiter vorgesehen sein, dass die mindestens eine elektronische Komponente mit dem Stecker und/oder der Steckdose lösbar, insbesondere austauschbar, verbunden ist. Somit ist es denkbar, dass dem Stecker verschiedenen Einsatzgebieten bzw. verschiedenen Anforderungen entsprechend elektronische Komponenten austauschbar zugeordnet werden. Dieses Zuordnen kann beispielsweise durch ein Hineinschieben der Komponente in den Stecker, durch eine Klickverbindung, eine Rastverbindung oder dergleichen erfolgen. Gleichermaßen kann die elektronische Komponente in einer Steckdose austauschbar mit selbiger verbunden sein.

Ein weiteres besonderes vorteilhaftes Ausführungsbeispiel der vorliegenden Erfindung kann es vorsehen, dass die elektronische Komponente einen Neigungswinkelmesser, einen Beschleunigungssensor, ein Warnsignal, eine optische Einrichtung, eine akustische Einrichtung, einen Datenspeicher, eine Sendeeinrichtung, eine Empfangseinrichtung oder eine Schnittstelle für weitere elektronische Einrichtungen i umfasst Durch die elektronische Miniaturisierung der Komponenten lassen sich auch mehrere der genannten Gegenstände in den Stecker bzw. in die Steckdose integrieren. Insbesondere der in den Stecker und/oder in die Steckdose integrierte Neigungswinkelmesser ist für den Betrieb der Hubladebühne essentiell, da hierdurch die relative Lage der Ladeplattform im Raum bestimmbar ist. Ausgehend von diesem Signal wird die weitere Bewegung der Hubladebühne gesteuert.

So kann es weiter vorgesehen sein, dass durch den Neigungswinkelmesser der relative Winkel der Ladeplattform zu einer, zwei oder drei Ebenen in einem kartesischen Koordinatensystem bestimmbar ist. Abhängig von der relativen Lage der Ladeplattform im Raum lässt sich diese durch Antriebe steuern. Dabei kann die Ladeplattform sowohl um eine, zwei oder drei Achsen den vorbestimmten Winkeln entsprechend verfahren werden.

Außerdem kann es vorgesehen sein, dass die Steckverbindung, insbesondere der Stecker und/oder die Steckdose, mit einer Steuereinheit, vorzugsweise mit Fußbetätigungsmitteln, für die Ladeplattform verbunden ist und die Steuereinheit über die Steckverbindung, insbesondere den Stecker und/oder die Steckdose ansteuerbar ist. Die in die Ladeplattform integrierte Fußsteuerung ist mit einer elektronischen Komponente in der Steckverbindung, insbesondere in dem Stecker, verbunden. Die durch die Fußbetätigung an die elektronische Komponente übermittelten Daten werden von selbiger an die Antriebe weitergeleitet, sodass die Ladeplattform sich entsprechend der Fußbedienung bewegt. Somit lässt sich über die Steckverbindung sowohl die Lage der Ladeplattform bestimmen, als auch Steuersignale für die Ausrichtung der Ladeplattform im Raum aufnehmen, um diese an die entsprechenden Antriebe weiterzuleiten.

Darüber hinaus kann es durch ein weiteres Ausführungsbeispiel vorgesehen sein, dass eine optische und/oder eine akustische Signaleinrichtung an der Ladeplattform über die Steckverbindung, insbesondere den Stecker und/oder die Steckdose, ansteuerbar sind. Eine Ladeplattform weist üblicherweise an den Seitenkanten Signalmittel wie beispielsweise Blinklichter auf. Diese Signalmittel lassen sich ebenfalls über die Steckverbindung bzw. über die in der Steckverbindung integrierte elektronische Komponente ansteuern bzw. mit elektrischer Energie versorgen.

Bevorzugt kann es außerdem vorgesehen sein, dass die Steckverbindung, insbesondere der Stecker und/oder die Steckdose, zur Energieversorgung und/oder Datenübertragung über eine Leitung mit einer Steuereinrichtung zum Steuern und/oder eine Einrichtung zum Überwachen der Antriebe verbunden sind. Somit lässt sich über die Steckverbindung bzw. über die in dem Stecker integrierte elektronische Komponente durch einfaches Zusammenstecken die gesamte Hubladebühne bzw. die Ladeplattform auf eine einfache Art und Weise in Betrieb nehmen. Durch das einfache Verbinden des Steckers mit der Steckdose können selbige auf eine verlässliche Art und Weise zusammengeführt werden. Ein bevorzugtes Ausführungsbeispiel der Erfindung wird im Folgenden anhand der Zeichnung näher beschrieben. In dieser zeigt:
- Fig. 1: eine perspektivische Darstellung eines Steckers einer Steckverbindung,
- Fig. 2: eine perspektivische Darstellung einer Steckdose der Steckverbindung,
- Fig. 3: eine perspektivische Ansicht der Steckverbindung beim Zusammenfügen,
- Fig. 4: eine Seitenansicht der Steckverbindung gemäß der Fig. 3,
- Fig. 5: eine perspektivische Ansicht der zusammengesetzten Steckverbindung,
- Fig. 6: eine Seitenansicht der in Fig. 5 dargestellten Steckverbindung,
- Fig. 7: eine Hubladebühne mit der Steckverbindung, und
- Fig. 8: eine Darstellung einer Ausschnittsvergrößerung der Fig. 7.

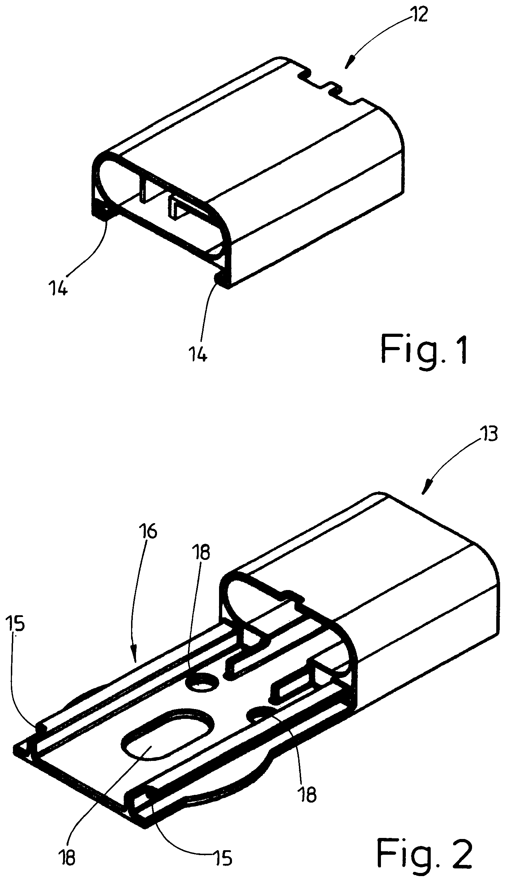

Zur elektrischen Kontaktierung einer Hubladebühne 10 zum Anbauen an ein Fahrzeug dient erfindungsgemäß eine Steckverbindung 11. Diese Steckverbindung 11 kann auch selbst als ein elektrisches Anbauteil, wie beispielsweise ein Sensor, ausgebildet sein. Die Steckverbindung besteht im Wesentlichen aus einem Stecker 12 (Fig. 1) und einer mit dem Stecker 12 korrespondieren Steckdose 13 (Fig. 2).

Zum Verbinden des Steckers 12 mit der Steckdose 13 weist der Stecker 12 zwei Gleitorgane 14 auf, welche sich auf Schienen 15 der Steckdose 13 fügen und verschieben lassen (Fig. 1, 2). Somit lässt sich der Stecker 12 auf einem die Schienen 15 aufweisenden Führungselement 16, welches einstückig mit der Steckdose 13 verbunden ist, führen und mit der Steckdose 13 in Kontakt bringen.

Sowohl der Stecker 12 als auch die Steckdose 13 sind bei dem hier dargestellten Ausführungsbeispiel quaderförmig ausgebildet und weisen in ihrem Inneren ein Hohlraum auf. Es ist jedoch auch denkbar, dass der Stecker 12 bzw. die Steckdose 13 eine andere Form aufweisen. Die Hohlräume des Steckers und der Steckdose 13 dienen der Aufnahme einer elektronischen Komponente 20. Diese mindestens eine elektronische Komponente 20 kann zur Steuerung wenigstens eines Antriebes der Hubladebühne 10 dienen. Bei dieser elektronischen Komponente 20 kann es sich jedoch auch um Sensoren jeglicher Art und andere elektronische Einrichtungen handeln.

Die Steckdose 13 kann derart ausgebildet sein, dass sie lediglich als Halterung für den die elektronische Komponente 20 aufweisenden Stecker 12 dient. Es ist erfindungsgemäß aber auch vorgesehen, dass die Steckdose 13 selbst elektronische Komponenten 20 aufweist, die durch den Stecker 12 lediglich angesteuert und/oder mit Energie versorgt werden. Darüber hinaus kann es vorgesehen sein, dass der Stecker 12 und die Steckdose 13 jeweils eine elektronische Komponente 20 aufweisen, die im zusammengesteckten Zustand einer bestimmten Funktion aufweisen.

Die Steckdose 13 weist für die Befestigung der Steckdose 13 bzw. der Steckverbindung 11 an der Hubladebühne 10 bzw. einer Ladeplattform 17 Bohrungen 18 auf. Diese Bohrungen 18 sind dem Führungselement 16 zugeordnet.

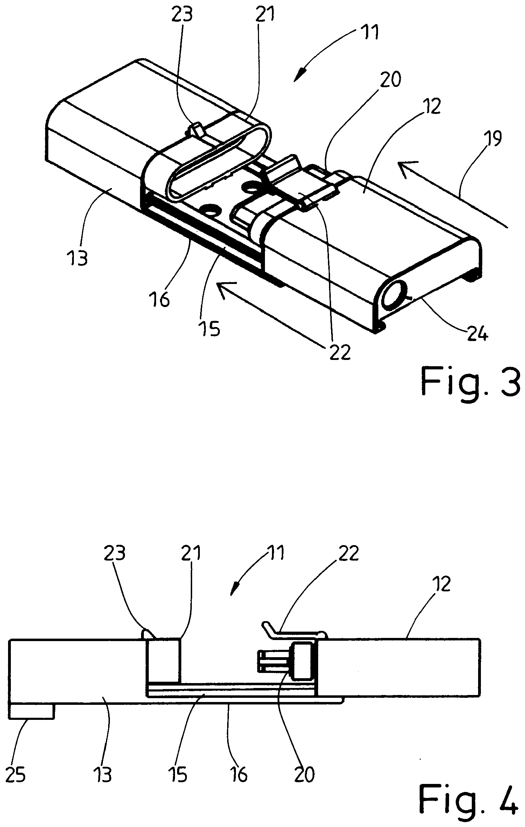

In der Fig. 3 ist dargestellt, wie der Stecker 12 mit den Gleitorganen 14 in Richtung 19 auf das Führungselement 16 geschoben wird, um dann in Kontakt mit der Steckdose 13 zu treten. Bei dem in der Fig. 3 dargestellten Ausführungsbeispiel weist der Stecker 12 eine elektronische Komponente 20 auf, welche in einer Aufnahme 21 positioniert ist, die in der Steckdose 13 angeordnet ist.

Der Stecker 12 weist für eine lösbare Verbindung mit der Steckdose 13 ein hebelartiges Rastmittel 22 auf, welches beim Zusammenfügen des Steckers 12 mit der Steckdose 13 über eine Rastnase 23 führbar und dort arretierbar ist. Durch diese rastende Verbindung des Steckers 12 mit der Steckdose 13 kann sichergestellt werden, dass die Steckverbindung 11 auch bei schweren Erschütterungen nicht gelöst wird.

Für die Ansteuerung der elektronischen Komponenten 20 im Stecker 12 bzw. für die Energieversorgung der elektronischen Komponente 20 weist der Stecker 12 einen Kabelausgang 24 auf, durch den ein nicht dargestelltes Kabel mit der elektronischen Komponente 20 verbindbar ist (Fig. 3).

Die Steckdose 13 kann des Weiteren ebenfalls einen Kabelausgang 25 aufweisen, über den sich die Steckverbindung 11 bzw. der Stecker 12 und/oder die Steckdose 13 mit der Ladeplattform 17 durch ein nicht dargestelltes Kabel verbinden lassen (Fig. 4). Dieses Kabel kann dann beispielsweise zur Kontaktierung eines Fußpedals 26, einer optischen Signaleinrichtungen oder dergleichen dienen.

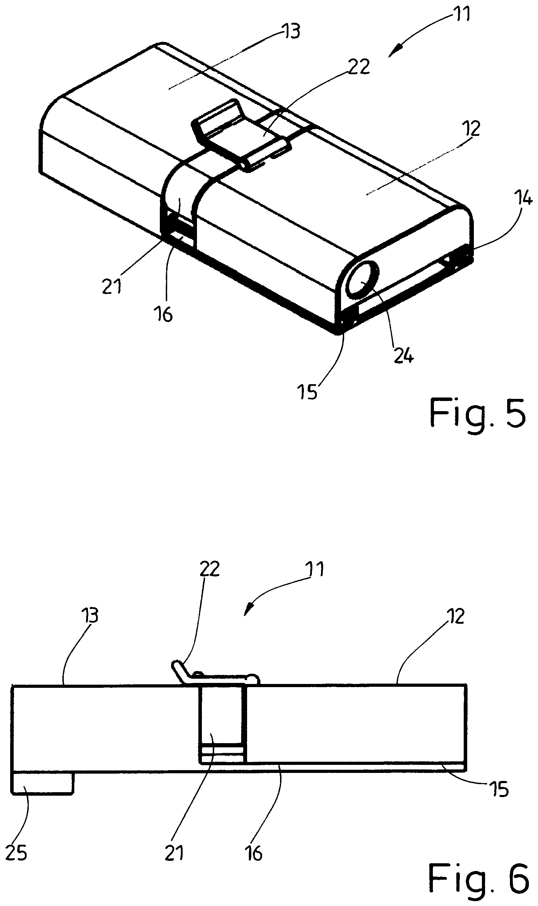

In den Fig. 5 und 6 ist die Steckverbindung 11 in dem zusammengefügten Zustand zu sehen. Die Länge der zusammengesteckten Steckverbindung 11 kann 50 mm bis 200 mm, insbesondere 75 mm bis 150 mm, vorzugsweise 100 mm betragen. Die Höhe der Steckverbindung 11 beträgt 5 mm bis 30 mm, insbesondere 20 mm. Die Länge des Steckers kann 20 mm bis 60 mm, insbesondere 30 mm bis 50 mm, vorzugsweise 48 mm, betragen, während die Breite 20 mm bis 50 mm, insbesondere 30 mm bis 40 mm, vorzugsweise 38 mm beträgt. Die Höhe des Steckers beträgt 5 mm bis 30 mm, insbesondere 10 mm bis 20 mm, vorzugsweise 18 mm. Die Länge der Steckdose 13 mit dem Führungselement 16 entspricht der Länge der Steckverbindung 11. Die Länge der Steckdose 13 kann jedoch auch von diesem Wert abweichen. Gleichermaßen entsprechen auch die Breite sowie die Höhe der Steckdose 13 der Breite und der Höhe der Steckverbindung 11. Auch hier ist es denkbar, dass die Dimensionierung der Steckdose 13 von der der Steckverbindung 11 abweicht.

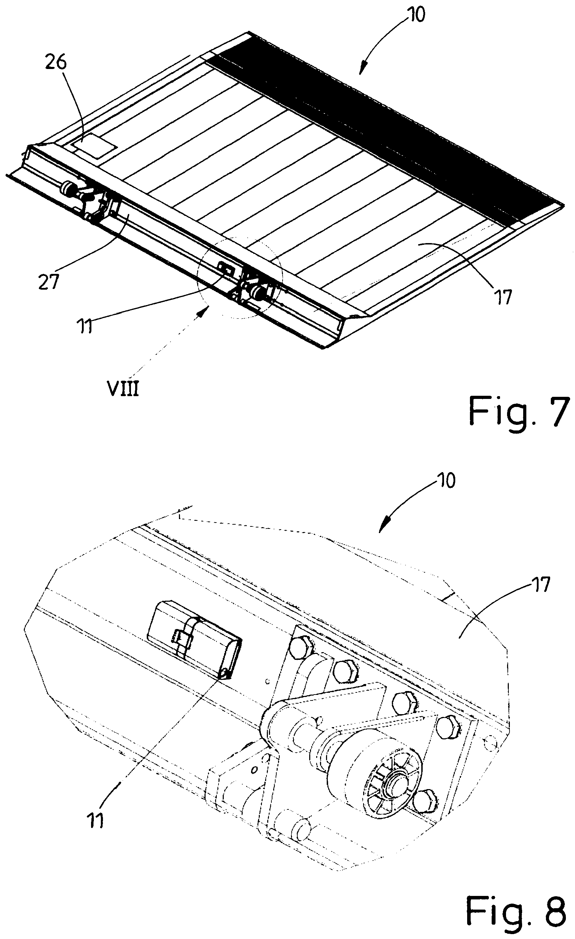

In der Fig. 7 ist eine Hubladebühne 10 dargestellt, welche an einer der Ladefläche zugewandten Seite 27 eine Steckverbindung 11 zugeordnet ist. Prinzipiell lässt sich die Steckverbindung 11 an jeder beliebigen Position an der Ladeplattform 17 befestigen. Die in der Fig. 8 dargestellte Ausschnittsvergrößerungen der Fig. 7 zeigt, dass die Steckverbindung 11 an einer besonders geschützten Position an der Ladeplattform 17 angeordnet ist. Aus Gründen der Übersichtlichkeit ist ein Kabel zur Kontaktierung der Steckverbindung 11 hier nicht dargestellt.

Für die Installation der Steckverbindung 11 ist lediglich der die elektronische Komponente 20 aufweisenden Stecker 12, welcher mit einem Kabel an die Steuereinrichtung des Fahrzeugs gekoppelt ist, in die an der Ladeplattform 17 befestigten Steckdose 13 einzurasten. Durch das Führungselement 16 ist die Position der Steckdose 13 und damit auch die Position der elektronischen Komponente 20 an der Hubladebühne 10 klar vordefiniert. Das heiß, dass beispielsweise Winkelsensoren derart vorkonfigurierbar bzw. vorinstallierbar sind, dass sie nach dem Einrasten in der Steckdose 13 sofort in Betrieb nehmbar sind, ohne dass eine eventuell notwendige Eichung oder Kalibrierung der Sensoren notwendig ist. Auf diese Weise lässt sich eine besonders einfache und sichere Inbetriebnahme jeglicher elektronischer Komponenten, insbesondere der Sensoren, gewährleisten.

### Bezugszeichenliste:

- 10: Hubladebühne
- 11: Steckverbindung
- 12: Stecker
- 13: Steckdose
- 14: Gleitorgan
- 15: Schiene
- 16: Führungselement
- 17: Ladeplattform
- 18: Bohrung
- 19: Richtung
- 20: elektronische Komponente
- 21: Aufnahme
- 22: Rastmittel
- 23: Rastnase
- 24: Kabelausgang
- 25: Kabelausgang
- 26: Fußpedal
- 27: Seite

## Patentansprüche

1. Hubladebühne (10) zum Anbau an ein Fahrzeug mit einer Ladeplattform (17), einem Hubwerk, das wenigstens einen Antrieb zum Heben, Senken und/oder Verschwenken der Ladeplattform (17) aufweist und mit mindestens einer einer Steuerung zugeordneten elektronischen Komponente (20) zur Steuerung des wenigstens einen Antriebs, **dadurch gekennzeichnet, dass** die mindestens eine elektronische Komponente (20) einer Steckverbindung (11) mit einem Stecker (12) und einer an der Hubladebühne (10) befestigbaren Steckdose (13) zugeordnet ist, wobei es sich bei der elektronischen Komponente (20) um einen Sensor handelt, der in den Stecker (12) integriert ist und wobei die Hubladebühne (10) durch Zusammenstecken des den Sensor aufweisenden Steckers (12) mit der an der Hubladebühne (10) befestigten Steckdose (13) in Betrieb nehmbar ist.

2. Hubladebühne (10) nach Anspruch 1, **dadurch gekennzeichnet, dass** die mindestens eine elektronische Komponente (20) in dem Stecker (12) und in der Steckdose (13) integriert ist.

3. Hubladebühne (10) nach Anspruch 1 oder 2, **dadurch gekennzeichnet, dass** die mindestens eine elektronische Komponente (20) mit dem Stecker (12) und/oder der Steckdose (13) lösbar, insbesondere austauschbar, verbunden ist.

4. Hubladebühne (10) nach einem der vorherigen Ansprüche, **dadurch gekennzeichnet, dass** die elektronische Komponente (20) einen Neigungswinkelmesser, einen Beschleunigungssensor, ein Warnsignal, eine optische Einrichtung, eine akustische Einrichtung, einen Datenspeicher, eine Sendeeinrichtung, eine Empfangseinrichtung oder eine Schnittstelle für weitere elektronische Einrichtungen umfasst.

5. Hubladebühne (10) nach Anspruch 4, **dadurch gekennzeichnet, dass** durch den Neigungswinkelmesser der relative Winkel der Ladeplattform (17) zu einer, zwei oder drei Ebenen in einem kartesischen Koordinatensystem bestimmbar ist.

6. Hubladebühne (10) nach einem der vorherigen Ansprüche, **dadurch gekennzeichnet, dass** die Steckverbindung (11), insbesondere der Stecker (12) und/oder die Steckdose (13), mit einer Steuereinheit, vorzugsweise mit Fußbetätigungsmitteln (26), für die Ladeplattform (17) verbunden ist und die Steuereinheit über die Steckverbindung (11), insbesondere den Stecker (12) und/oder die Steckdose (13), ansteuerbar ist.

7. Hubladebühne (10) nach einem der vorherigen Ansprüche, **dadurch gekennzeichnet, dass** eine optische und/oder akustische Signaleinrichtung an der Ladeplattform (17) über die Steckverbindung (11), insbesondere den Stecker (12) und/oder die Steckdose (13), ansteuerbar ist.

8. Hubladebühne (10) nach einem der vorherigen Ansprüche, **dadurch gekennzeichnet, dass** die Steckverbindung (11), insbesondere der Stecker (12) und/oder die Steckdose (13), zur Energieversorgung und/oder Datenübertragung über eine Leitung mit einer Steuereinrichtung zum Steuern und/oder einer Einrichtung zum Überwachen der Antriebe verbunden ist.

## Claims

1. Tail lift (10) for attachment to a vehicle, comprising a loading platform (17), a lifting mechanism which has at least one drive for lifting, lowering and/or pivoting the loading platform (17), and comprising at least one electronic component (20), which is associated with a controller, for controlling the at least one drive, **characterized in that** the at least one electronic component (20) is associated with a plug-in connection (11) comprising a plug (12) and a plug socket (13) which can be fastened to the tail lift (10), wherein the electronic component (20) is a sensor which is integrated into the plug (12), and wherein the tail lift (10) can be put into operation by plug-connecting the plug (12) which comprises the sensor to the plug socket (13) which is fastened to the tail lift (10).

2. Tail lift (10) according to Claim 1, **characterized in that** the at least one electronic component (20) is integrated in the plug (12) and in the plug socket (13).

3. Tail lift (10) according to Claim 1 or 2, **characterized in that** the at least one electronic component (20) is releasably, in particular exchangeably, connected to the plug (12) and/or to the plug socket (13) .

4. Tail lift (10) according to one of the preceding claims, **characterized in that** the electronic component (20) comprises an inclination angle meter, an acceleration sensor, a warning signal, an optical device, an acoustic device, a data storage means, a transmitting device, a receiving device or an interface for further electronic devices.

5. Tail lift (10) according to Claim 4, **characterized in that** the relative angle of the loading platform (17) in relation to one, two or three planes in a Cartesian coordinate system can be determined by the inclination angle meter.

6. Tail lift (10) according to one of the preceding claims, **characterized in that** the plug-in connection (11), in particular the plug (12) and/or the plug socket (13), is connected to a control unit, preferably to foot-controlled operating means (26), for the loading platform (17) and the control unit can be actuated via the plug-in connection (11), in particular the plug (12) and/or the plug socket (13).

7. Tail lift (10) according to one of the preceding claims, **characterized in that** an optical and/or acoustic signalling device on the loading platform (17) can be actuated via the plug-in connection (11), in particular the plug (12) and/or the plug socket (13).

8. Tail lift (10) according to one of the preceding claims, **characterized in that** the plug-in connection (11), in particular the plug (12) and/or the plug socket (13), is connected via a line to a control device for controlling and/or to a device for monitoring the drives for the purpose of power supply and/or data transmission.

## Revendications

1. Plate-forme de chargement par levage (10) destinée à être montée sur un véhicule, comprenant une plate-forme de chargement (17), un mécanisme de levage qui présente au moins un dispositif d'entraînement pour lever, abaisser et/ou faire pivoter la plate-forme de chargement (17), et au moins un composant électronique (20) associé à une unité de commande destinée à commander ledit au moins un dispositif d'entraînement, **caractérisée en ce que** ledit au moins un composant électronique (20) est associé à une connexion enfichable (11), qui comporte un connecteur mâle (12) et un connecteur femelle (13), pouvant être fixée à la plate-forme de chargement par levage (10), dans lequel le composant électronique (20) est un capteur qui est intégré au connecteur mâle (12) et dans lequel la plate-forme de chargement par levage (10) peut être mise en service en enfichant l'un dans l'autre le connecteur mâle (12), qui comporte le capteur, et le connecteur femelle (13), qui est fixé à la plate-forme de chargement par levage (10).

2. Plate-forme de chargement par levage (10) selon la revendication 1, **caractérisée en ce que** ledit au moins un composant électronique (20) est intégré au connecteur mâle (12) et au connecteur femelle (13).

3. Plate-forme de chargement par levage (10) selon la revendication 1 ou 2, **caractérisée en ce que** ledit au moins un composant électronique (20) est relié de manière amovible, en particulier échangeable, au connecteur mâle (12) et/ou au connecteur femelle (13).

4. Plate-forme de chargement par levage (10) selon l'une des revendications précédentes, **caractérisée en ce que** le composant électronique (20) comprend un inclinomètre, un capteur d'accélération, un signal d'avertissement, un dispositif optique, un dispositif acoustique, une mémoire de données, un dispositif d'émission, un dispositif de réception ou une interface pour d'autres dispositifs électroniques.

5. Plate-forme de chargement par levage (10) selon la revendication 4, **caractérisée en ce que** l'angle relatif de la plate-forme de chargement (17) peut être déterminé par l'inclinomètre par rapport à un, deux ou trois plans dans un système de coordonnées cartésiennes.

6. Plate-forme de chargement par levage (10) selon l'une des revendications précédentes, **caractérisée en ce que** la connexion enfichable (11), en particulier le connecteur mâle (12) et/ou le connecteur femelle (13), est reliée à une unité de commande, de préférence à des moyens d'actionnement au pied (26), destinés à la plate-forme de chargement (17) et **en ce que** l'unité de commande peut être commandée par l'intermédiaire de la connexion enfichable (11), en particulier du connecteur mâle (12) et/ou du connecteur femelle (13).

7. Plate-forme de chargement par levage (10) selon l'une des revendications précédentes, **caractérisée en ce qu'**un dispositif de signalisation optique et/ou acoustique présent sur la plate-forme de chargement (17) peut être commandé par l'intermédiaire de la connexion enfichable (11), en particulier du connecteur mâle (12) et/ou du connecteur femelle (13).

8. Plate-forme de chargement par levage (10) selon l'une des revendications précédentes, **caractérisée en ce que** la connexion enfichable (11), en particulier le connecteur mâle (12) et/ou le connecteur femelle (13), est reliée aux fins de l'alimentation électrique et/ou de la transmission de données par l'intermédiaire d'une ligne à un dispositif de commande destiné à assurer la commande et/ou à un dispositif destiné à surveiller les dispositifs d'entraînement.
